Europäisches Patentamt

(19) European Patent Office

Office européen des brevets

(11) **EP 0 582 371 B1**

(12) **EUROPEAN PATENT SPECIFICATION**

(45) Date of publication and mention
of the grant of the patent:
**02.10.1996 Bulletin 1996/40**

(51) Int. Cl.⁶: $C01G\ 19/02$

(21) Application number: **93304519.7**

(22) Date of filing: **10.06.1993**

(54) **Electroconductive fine tin oxide powder and a method for its preparation**

Elektrisch leitfähiges feines Zinnoxid-Pulver und Verfahren zu seiner Herstellung

Poudre conductrice fine à base d'oxyde stannique et procédé pour sa préparation

(84) Designated Contracting States:
AT BE CH DE DK ES FR GB GR IE IT LI LU MC NL PT SE

(30) Priority: **11.06.1992 JP 177552/92**

(43) Date of publication of application:
**09.02.1994 Bulletin 1994/06**

(73) Proprietor: **ISHIHARA SANGYO KAISHA, LTD.**
**Nishi-ku, Osaka (JP)**

(72) Inventors:
• **Okuda, Haruo,**
**c/o Yokkaichi Jigyosho**
**Yokkaichi-shi (JP)**

• **Futamata, Hideo,**
**c/o Yokkaichi Jigyosho**
**Yokkaichi-shi (JP)**
• **Takahashi, Hideo,**
**c/o Yokkaichi Jigyosho**
**Yokkaichi-shi (JP)**
• **Sanefuji, Norihiko,**
**c/o Yokkaichi Jigyosho**
**Yokkaichi-shi (JP)**

(74) Representative: **Rees, David Christopher et al**
**Kilburn & Strode**
**30 John Street**
**London WC1N 2DD (GB)**

(56) References cited:
**DE-A- 4 006 044          GB-A- 1 517 341**
**GB-A- 2 025 915**

**Description**

This invention relates to a white electroconductive powder having superior electroconductive properties and a method for preparing said powder. The electroconductive powder of the invention is most useful as material for affording electroconductive properties to electrophotographic light-sensitive paper, electrostatic recording paper, and the like, as antistatic fillers in coatings, inks, plastics, rubber, fibers, and the like, and as an electroconductive base material for photosensitive electrophotography.

As an electroconductive powder, carbon black has been known, but its use is highly restricted because of its black colour, poor dispersibility in vehicles, of containing carcinogenic substances, and like limitations. Recently, tin oxide powder doped with antimony, or titanium dioxide powder coated with a layer of tin oxide doped with antimony have been developed and used.

Tin oxide powder containing antimony has excellent electroconductive properties, but as a safety precaution against the toxicity of antimony, there is a demand for electroconductive powder free from antimony, and many proposals involving other metals such as germanium, lithium, zinc etc., and phosphorus, have been made.

As a method to prepare tin oxide powder without the use of antimony, there are, for example:-

a. Japanese Patent Publn. 32213/90 proposes:
Add a tin chloride solution containing dissolved Ge, P, Li and Zn to an aqueous alkali solution to cause precipitation, and its precipitate is fired at 350-700 °C;
b. Japanese Patent Laid-open No. 11519/88 proposes:
Maintain an aqueous solution of a tin compound at pH 8-12 to cause the tin compound in the solution to be gradually hydrolized, and allow the forming of a sol containing colloid particles of metal oxides and/or metal oxide hydrates, recover the colloid particles from the sol, impregnate the colloid particles with an aqueous solution of a phosphorus compound and then dry and fire the particles among others.

In order to obtain a white powder having good electroconductive properties free from antimony, the inventors studied reference (a) above, particularly on the doping with phosphorus. However, a tin oxide powder doped with phosphorus has the following deficiencies:

1. Electroconductivity not sufficient;
2. to improve electroconductivity, the powder has to be fired again in a reducing atmosphere;
3. shelf-life stability not sufficient,

among others, all of these difficulties are required to be overcome.

An object of the invention is to obtain a fine white powder having sufficient electroconductivity, free from antimony and having sufficient shelf-life stability for the various uses.

Another object of the invention is to provide a method to obtain a fine white powder having sufficient electroconductivity, free from antimony and having sufficient shelf-life stability for the various purposes.

1. Where phosphorus is contained in crystals of tin oxide for the purpose of affording high electroconductivity, there is a critical limit to the amount of phosphorus which can be contained in the solid compared to the case of antimony doped therein, that is, where the amount of phosphorus is out of range of P/Sn in an atomic ratio of $2.7 \times 10^{-2}$ - $1.4 \times 10^{-1}$, the electroconductivity drops drastically, and the desired electroconductivity may not be obtained.
2. The temperature of heating after introducing phosphorus into tin oxide should be at least 800°C because heating under 700°C will not produce a product having the desired electroconductivity.
3. Unlike the case where germanium, lithium or zinc has been doped, phosphorus-doping by firing above 800°C will not cause any sintering of the particles.

The foregoing are the factors which has lead to the achievement of the invention.

The present invention is directed to an electroconductive powder characterized by having tin oxide as the main component and containing phosphorus at the atomic ratio of P/Sn = $2.7 \times 10^{-2}$ $1.4 \times 10^{-1}$, the powder having a specific surface area of at least 10 $m^2$/g and a powder electric resistance of not more than 500 $\Omega$cm.

The present invention is also directed to the method for obtaining an electroconductive powder by:

1. Reacting a solution of a soluble tin compound with an acid or an alkali in the presence of a solution of a soluble phosphorus compound, or
2. reacting a solution of a soluble tin compound with an acid or an alkali, and adding the soluble phosphorus oxide to the resultant precipitate of tin oxide hydrate,

to obtain a phosphorus-containing tin oxide hydrate, thereafter firing the thus obtained precipitate to a temperature of 800-1300°C, and then subjecting it to grinding.

The electroconductive powder of the invention is mainly of tin oxide, a solid solution, to which phosphorus has been introduced. The powder has specific area of at least 10 m$^2$/g (according to the simplified BET method) and has powder electric resistance not more than 500 Ωcm. In more detail, the powder contains phosphorus at an atomic ratio of P/Sn = 2.7 x 10$^{-2}$ - 1.4 x 10$^{-1}$, preferably 5.0 x 10$^{-2}$ - 9.0 x 10$^{-2}$, the balance being substantially tin oxide; the powder has a specific surface area of at least 10 m$^2$/g, preferably 15 m$^2$/g and a powder electric resistance of less than 500 Ωcm, preferably less than 200 Ωcm, more preferably, less than 100Ωcm. Note that where the amount of phosphorus is smaller or higher than the above noted range, the desired electroconductivity may not be achieved. Other aspects of the invention are given in the claims.

In the method for preparing the electroconductive fine powder of the present invention, there are many process approaches to cause precipitation of phosphorus-containing tin oxide hydrates, for example:

(1) In the presence of a solution of a soluble phosphorus compound, the process to react a solution of soluble tin compound solution with an acid or an alkali to precipitate hydrates of tin oxide having phosphorus compounds adsorbed thereon; and
(2) to react a soluble tin compound solution with an acid or an alkali generate a tin oxide hydrate precipitate and then adding a soluble phosphorus compound thereto to precipitate a phosphorus-containing tin oxide hydrate, among others.

In the process (1) above, one may for example:

(a) allow reaction among the soluble tin compound solution, the soluble phosphorus compound solution and an aqueous acid or alkali solution in hot water by simultaneous addition thereof, or
(b) add an acid or alkali to a mixed solution of the soluble tin compound solution and the soluble phosphorus compound solution and neutralize, among others. The neutralization reaction with an acid or an alkali should preferably be performed by heating or by carrying out the reaction in hot water of 30-100°C, preferably 50-90°C.

One may use various types of tin compounds in the present invention, for example, tin (IV) chloride [stannic chloride], tin (II) chloride [stannous chloride], potassium stannate, sodium stannate, and the like. With phosphorus compounds there are, for example, phosphorus trichloride, ortho-phosphoric acid, sodium hydrogen phosphate, trisodium phosphate, ammonium hydrogenphosphate, phosphorous acid, sodium dihydrogenphosphite, trisodium phosphite, phosphorus pentachloride, among others, and one or more than one of the above compounds can be used.

As solvents for the soluble tin compound solution and soluble phosphorus compound solution, one or more than one solvent selected from alcohol, aqueous hydrochloric acid solution and acetone are recommended, to which the tin compounds and phosphorus compounds are dissolved.

As neutralizing agent, the aqueous alkali solution, there are for example, hydroxides, carbonates or ammonium of alkali metals such as sodium hydroxide, potassium hydroxide, sodium carbonate, potassium carbonate, among others.

In the method of the present invention, the product of the neutralization reaction is separated and fired at 800-1300°C. Separation may be conducted with an ordinary filter, with washing where necessary. Then, filtration should desirably be conducted after adjusting the pH of the reaction solution after neutralization to not higher than 5, preferably to 2-4. When hydroxides or carbonates of alkali metals are used as neutralizing agent, sufficient washing should be performed to remove the alkali metals because insufficient washing would cause the retained alkali metals to be adsorbed on the reaction product and further cause lowering electroconductivity.

The separated reaction product should be dried as necessary and then fired in the temperature range of 800-1300°C, preferably 850-1250°C, more preferably in the range of 900-1200°C.

The firing may be carried out in an oxidizing atmosphere, a reducing atmosphere or an inert gas atmosphere, but firing in the air is most advantageous. In conventional art, the firing had to be performed at temperatures of 700°C or lower, but with the method of the invention, firing can be carried out at a temperature of higher than 700°C, especially 800°C or higher without causing the fired particles to be substantially enlarged or sintered, and it is one of the features of the present invention that such particles are readily afforded sufficient electroconductivity. The time period of firing may not be determined generally since it depends on the type of apparatus and the quantity subject to the treatment, 1 to 5 hours, preferably 1 to 2 hours is most suitable. After firing, grinding may be conducted according to known methods, and thereafter, the pH of the ground powder can be adjusted, and impurities removed.

Example 1

Into 500 ml. of 3N hydrochloric acid, 500 g of stannic chloride (SnCl$_4$ · 5H$_2$O) and 16.1 g of phosphorus trichloride (PCl$_3$) were dissolved to prepare a solution, which was introduced slowly over 20 minutes together with a suitable amount of an aqueous sodium hydroxide solution into 5 liters of hot water heated to 50°C, while maintaining the pH of the system at 7.0-7.5, and precipitates were formed. Then, hydrochloric acid was added to bring the pH of the system to 3.0. Thereafter, the precipitates were filtered and washed until the specific resistance of the filtrate showed 10,000 cm. After drying the obtained cake at 110°C for 12 hours, it was fired at 1000°C for 1 hour in an electric furnace, ground with a grinder and there was obtained the desired electroconductive fine powder having a specific surface area of 34 $m^2$/g (Sample A).

Example 2

Other than using 13.4 g of phosphorus trichloride ($PCl_3$), Example 1 was duplicated and the desired electroconductive fine powder having a specific surface area of 33 $m^2$/g (Sample B) was obtained.

Example 3

Example 1 was again duplicated but with 10.7 g of phosphorus trichloride ($PCl_3$), and one obtained the desired electroconductive fine powder having a specific surface area of 31 $m^2$/g (Sample C).

Example 4

Example 2 was duplicated with the exception of pH being maintained in the range of 9.0-9.5 during neutralization, and the desired electroconductive fine powder having a specific surface area of 39 $m^2$/g (sample D) was obtained.

Example 5

Into 500 ml. of 5 N hydrochloric acid, 500 g of stannic chloride ($SnCl_4$-$5H_2O$) was dissolved; also, 7.4 g of phosphoric acid ($H_3PO_4$) was dissolved into 200 ml of water to prepare the respective solutions, which were simultaneously introduced slowly over 30 minutes together with a suitable amount of an aqueous 3N sodium hydroxide solution into 5 liters of hot water at 60°C, while maintaining the pH of the system at 6.0-7.0, and precipitates were formed. Then, hydrochloric acid was added to bring the pH of the system to 3.0. Thereafter, the precipitates were filtered and washed until the specific resistance of the filtrate showed 10,000 $\Omega$cm. After drying the obtained cake at 110°C for 12 hours, it was fired at 1000°C for 1 hour in an electric furnace, ground with a grinder and there was obtained the desired electroconductive fine powder having a specific surface area of 32 $m^2$/g (Sample E).

Example 6

Into 500 ml. of 5N hydrochloric acid, 500 g of stannic chloride ($SnCl_4$-$5H_2O$) was dissolved; also, 10.8 g of disodium hydrogenphosphate ($Na_2HPO_4$) was dissolved into an aqueous solution of 3N sodium hydroxide to prepare the respective solutions, which were simultaneously introduced slowly over 20 minutes into 5 liters of hot water at 60°C, while maintaining the pH of the system at 6.0-7.0, and precipitates were formed. Then, hydrochloric acid was added to bring the pH of the system to 3.0. Thereafter, the precipitates were filtered and washed until the specific resistance of the filtrate showed 10,000 $\Omega$cm. After drying the obtained cake at 110°C for 12 hours, it was fired at 1000°C for 1 hour in an electric furnace, ground with a grinder and there was obtained the desired electroconductive fine powder having a specific surface area of 40 $m^2$/g (Sample F).

Example 7

Into 900 ml of 3N hydrochloric acid, 300 g of stannic chloride ($SnCl_4$-$5H_2O$) was dissolved to prepare the solution; this and a suitable amount of an aqueous solution of sodium hydroxide was simultaneously introduced slowly into 5 liters of 50°C warm water over 20 minutes while maintaining pH at 7.0-7.5, and precipitates were formed. To the precipitates, an aqueous hydrochloric acid solution containing 8.05 g of phosphorus trichloride ($PCl_3$) dissolved therein was added and the pH adjusted to pH 3 and stirred whereby phosphorus-containing tin oxide hydrate precipitates were obtained. The precipitates were filtered and then washed until the filtrate showed a specific resistance of 10,000 $\Omega$cm. The thus obtained cakes of the precipitates were dried at 110°C for 12 hours and fired at 1000°C for 1 hour in an electric furnance, ground with a grinder, and there was obtained the desired electroconductive fine powder having a specific surface area of 34.5 $m^2$/g (Sample G).

Example 8

Into 300 ml of 3N hydrochloric acid, 300 g of stannic chloride ($SnCl_4 \cdot 5H_2O$) and 4.41 g of orthophosphoric acid was added and together with a suitable amount of sodium hydroxide, introduced over 20 minutes into 5 liters of hot water at 90°C, while maintaining pH in the range of 7.0-7.5, and precipitates were formed. Hydrochloric acid was added to adjust pH of the system to 2.5 and the precipitate was then filtered and washed unitl the specific resistance of the filtrate showed 10,000 Ωcm. The thus obtained cakes were dried at 110°C for 12 hours and then fired for 2 hours at 1150°C in an electric furnace, ground with a grinder, and the desired electroconductive fine powder having a specific surface area of 14.5 $m^2$/g (Sample H) was obtained.

Example 9

Example 8 was repeated except for the firing temperature of 1100°C. The desired electroconductive fine powder having a specific surface area of 21.1$m^2$/g (Sample I) was obtained.

Comparative Example 1

Example 1 was repeated except that phosphorus trichloride was not used and a powder having a specific surface area of 8 $m^2$/g was obtained (Sample J).

Comparative Example 2

Example 1 was repeated with the exception of using 4.9 g of phosphorus trichloride ($PCl_3$) and a fine powder having specific surface area of 32 $m^2$/g was obtained (Sample K).

Comparative Example 3

Example 1 was repeated but with 31.3 g of phosphorus trichloride ($PCl_3$) and a fine powder having a specific surface area of 32 $m^2$/g was obtained (Sample L).

Comparative Example 4

Into 500 ml. of 5N hydrochloric acid, 500 g of stannic chloride ($SnCl_4 \cdot 5H_2O$) was dissolved; the solution and a suitable amount of an aqueous 3N sodium hydroxide solution were simultaneously introduced slowly over 20 minutes into 5 liters of hot water at 50°C, while maintaining the pH of the system at 6.0-7.0, and precipitates were formed. Then, hydrochloric acid was added to bring the pH of the system to 3.0. Thereafter, the precipitates were filtered and washed until the specific resistance of the filtrate showed 10,000 Ωcm. The thus obtained cakes were fired in a nitrogen stream for 2 hours at 350°C in a gas-purged electrical furnace, ground with a grinder and a fine powder having a specific surface area of 27 $m^2$/g (Sample M).

Comparative Example 5

Comparative Example 1 was repeated with the exception that the firing temperature was 600°C, and a fine powder having a specific surface area of 32 $m^2$/g was obtained (Sample N).

Comparative Example 6

Example 2 was repeated with the exception that the firing temperature was 600°C, and a fine powder having a specific surface area of 83 $m^2$/g was obtained (Sample O).

Testing of Products and Methods for Measurements

The sample powders obtained as above under Examples and Comparative Examples were measured with respect to powder electrical resistance, specific surface area and shelf-life stability according to the following methods:-

(1) Evaluation of Powder Electrical Resistance

The sample powder is shaped under a pressure of 100 kg/cm$^2$ into cylindrical compact disc (diameter 18 mm, thickness 3 mm), which direct current resistance was measured and the powder resistance calculated from the following formula ($\Omega$cm).

Powder Electric Resistance = Measured Value x [2.54/thickness]

(Note 2.54 is an Electrode Constant and thickness given in centimeters)

(2) Measurement of Specific Surface Area

A small amount of a sample, 0.1-0.2 g, is taken and purged of its air by standing it at 150°C for 30 minutes in nitrogen atmosphere. Then the sample is placed in a specific surface area measuring instrument (Flowsorb Type 2300, Micromellitic Company), and measured of its specific surface area with nitrogen/helium mixed gas according to the BET method.

(3) Shelf-life Stability of Powder Electrical Resistance

10 grams of a sample is spread over a filter paper and allowed to stand for one week in room temperature, and then its Powder Electrical Resistance was measured. The results are shown in Table 1, wherein M = mega and K = kilo.

The electroconductive fine powder of the invention is a powder wherein a specified amount of phosphorus is sufficiently contained in tin oxide crystals in the form of a solid solution. The white fine powder of the invention having superior electroconductivity, unlike those with antimony doping, is free from bluish tones, and is also free from toxicity and is highly safe in use. This powder also has a highly stable electroconductivity shelf life which allows various uses such as material for affording conductivity to light-sensitive paper for electrophotography, static recording paper, and the like, and as static-preventing fillers in coatings, inks, plastics, rubbers, textiles, and like uses. To prepare the electroconductive fine powder of the invention, a relatively high firing temperature of 800-1300°C is required, but does not allow growth of the fine particles or form sinters, which enables the industrial production of super fine particles having a specific surface area of higher than 10 m$^2$/g.

TABLE

| Sample/Exam-ple Nos. | Used Phospho-rus Compounds | P/Sn (Atomic Ratio) | Firing Temperature (°C) | Specific Surface Area ($m^2$/g) | Powder Electrical Resistance ($\Omega$cm) | |
|---|---|---|---|---|---|---|
| | | | | CONDITIONS | PROPERTIES | |
| | | | | | # | One Week Later |
| A/1 | $PCl_3$ | $8.2 \times 10^{-2}$ | 1000 | 34 | 75 | 70 |
| B/2 | " | $6.8 \times 10^{-2}$ | " | 33 | 25 | 27 |
| C/3 | $PCl_3$ | $5.5 \times 10^{-2}$ | " | 31 | 108 | 98 |
| D/4 | " | $6.8 \times 10^{-2}$ | " | 39 | 15 | 15 |
| E/5 | $H_3PO_4$ | $5.3 \times 10^{-2}$ | " | 32 | 11 | 13 |
| F/6 | $Na_2HPO_4$ | $5.3 \times 10^{-2}$ | " | 40 | 21 | 20 |
| G/7 | $PCl_3$ | $6.8 \times 10^{-2}$ | " | 34.5 | 160 | 156 |
| H/8 | $H_3PO_4$ | $5.3 \times 10^{-2}$ | 1150 | 14.5 | 16 | 15 |
| I/9 | " | $5.3 \times 10^{-2}$ | 1100 | 21.1 | 12 | 12 |
| COMPARATIVE EXAMPLES | | | | | | |
| J/1 | - | - | 1000 | 8 | 1.4M | 1.4M |
| K/2 | $PCl_3$ | $2.5 \times 10^{-2}$ | " | 32 | 2.3M | 2.4M |
| L/3 | " | $1.6 \times 10^{-1}$ | " | 32 | 12M | 12M |
| M/4 | - | - | 350 | 27 | 85 | 1.0K |
| N/5 | - | - | 600 | 32 | 18M | 18M |
| O/6 | $PCl_3$ | $6.8 \times 10^{-2}$ | " | 83 | 45K | 45K |

\# as prepared

**Claims**

1. An electroconductive fine powder comprising tin oxide as its main component, characterised in that it contains phosphorus at an atomic ratio of P/Sn in the range of $2.7 \times 10^{-2}$ to $1.4 \times 10^{-1}$, the powder having a specific surface area of at least 10$m^2$/g and a powder electrical resistivity of not more than 500$\Omega$cm.

2. An electroconductive fine powder as claimed in Claim 1, characterised in that the content of phosphorus at an atomic ratio of P/Sn is in the range of $5.0 \times 10^{-2}$ to $9.0 \times 10^{-2}$.

3. A method for preparing an electroconductive fine powder comprising tin oxide as its main component and containing phosphorus at an atomic ratio of P/Sn in the range of $2.7 \times 10^{-2}$ - $1.4 \times 10^{-1}$, the powder having a specific surface area of at least 10 $m^2$/g and a powder electric resistivity of not more than 500$\Omega$cm, characterised in that the method comprises:

    (a) allowing a solution of a soluble tin compound to react with an alkali or an acid in the presence of a solution of a soluble phosphorus compound, or
    (b) allowing a solution of a soluble tin compound to react with an alkali or an acid and then reacting the tin oxide hydrate precipitate thus produced with a solution of a soluble phosphorus compound,
    to form a phosphorus-containing tin oxide hydrate precipitate; separating the precipitate; firing separated precipitate at a temperature of 800-1300°C, and then grinding the fired precipitate.

4. A coating composition characterised in that it contains 10-80 weight percent of the electroconductive fine powder of Claim 1 or Claim 2.

5. A dispersion in water or an organic solvent, characterised in that it contains 10-80 weight percent of the electroconductive fine powder of Claim 1 or Claim 2.

## Patentansprüche

1. Elektrisch leitendes feines Pulver mit Zinnoxid als Hauptkomponente, dadurch gekennzeichnet, daß es Phosphor in einem Atomverhältnis P/Sn im Bereich von $2,7 \times 10^{-2}$ bis $1,4 \times 10^{-1}$ enthält und eine spezifische Oberfläche von mindestens 10 $m^2$/g sowie einen spezifischen elektrischen (Pulver-)Widerstand von nicht mehr als 500 $\Omega$cm aufweist.

2. Elektrisch leitendes feines Pulver nach Anspruch 1, dadurch gekennzeichnet, daß der Phosphorgehalt, ausgedrückt als Atomverhältnis P/Sn, im Bereich von $5,0 \times 10^{-2}$ bis $9,0 \times 10^{-2}$ liegt.

3. Verfahren zur Herstellung eines elektrisch leitenden feinen Pulvers mit Zinnoxid als Hauptkomponente und Phosphor in einem Atomverhältnis P/Sn im Bereich von $2,7 \times 10^{-2}$ bis $1,4 \times 10^{-1}$ sowie einer spezifischen Oberfläche von mindestens 10 $m^2$/g und eines spezifischen elektrischen (Pulver-)Widerstands von nicht mehr als 500 $\Omega$cm duch

(a) Reagierenlassen einer Lösung einer löslichen Zinnverbindung mit einem Alkali oder einer Säure in Gegenwart einer Lösung einer löslichen Phosphorverbindung oder

(b) Reagierenlassen einer Lösung einer löslichen Zinnverbindung mit einem Alkali oder einer Säure und anschließendes Reagierenlassen des hierbei gebildeten Zinnoxidhydratniederschlags mit einer Lösung einer löslichen Phosphorverbindung,
zur Bildung eines phosphorhaltigen Zinnoxidhydratniederschlags, Abtrennen des Niederschlags, Brennen des abgetrennten Niederschlags bei einer Temperatur von 800 - 1300°C und anschließendes Vermahlen des gebrannten Niederschlags.

4. Beschichtungsmasse, dadurch gekennzeichnet, daß sie 10 - 80 Gew.-% des elektrisch leitenden feinen Pulvers nach Anspruch 1 oder 2 enthält.

5. Dispersion in Wasser oder einem organischen Lösungsmittel, dadurch gekennzeichnet, daß sie 10 - 80 Gew.-% des elektrisch leitenden feinen Pulvers nach Anspruch 1 oder 2 enthält.

## Revendications

1. Poudre électroconductrice fine comprenant un oxyde d'étain comme composant principal, caractérisée en ce qu'elle contient du phosphore selon un rapport atomique P/Sn compris dans l'intervalle allant de $2,7 \times 10^{-2}$ à $1,4 \times 10^{-1}$, la poudre ayant une surface spécifique d'au moins 10 $m^2$/g et une résistivité électrique de poudre qui ne soit pas supérieure à 500 $\Omega$cm.

2. Poudre électroconductrice fine telle que revendiquée dans le revendication 1, caractérisée en ce que la teneur en phosphore, selon un rapport atomique P/Sn, est comprise dans l'intervalle allant de $5,0 \times 10^{-2}$ à $9,0 \times 10^{-2}$.

3. Procédé pour préparer une poudre électroconductrice fine comprenant un oxyde d'étain comme principal composant et contenant du phosphore selon un rapport atomique P/Sn compris dans l'intervalle allant de $2,7 \times 10^{-2}$ à $1,4 \times 10^{-1}$; la poudre ayant une surface spécifique d'au moins 10 $m^2$/g et une résistivité électrique de poudre qui ne soit pas supérieure à 500 $\Omega$cm, caractérisé en ce que le procédé comprend les étapes consistant à :

(a) laisser une solution d'un composé d'étain soluble réagir avec une base ou un acide en présence d'une solution d'un composé phosphoré soluble, ou
(b) laisser une solution d'un composé d'étain soluble réagir avec une base ou un acide, et ensuite faire réagir le précipité d'hydrate d'oxyde d'étain ainsi produit, avec une solution d'un composé phosphoré soluble, pour former un précipité d'hydrate d'oxyde d'étain contenant du phosphore; séparer le précipité; chauffer le précipité séparé à une température de 800 - 1300°C, et ensuite broyer le précipité chauffé.

4. Composition de revêtement caractérisée en ce qu'elle contient 10 - 80 pour cent en poids de la poudre électroconductrice fine de la revendication 1 ou de la revendication 2.

5. Dispersion dans l'eau ou dans un solvant organique, caractérisée en ce qu'elle contient 10 - 80 pour cent en poids de la poudre électroconductrice fine de la revendication 1 ou de la revendication 2.